# EUROPEAN PATENT APPLICATION

(11) **EP 2 133 127 A1**
(43) Date of publication of application: **16.12.2009**
(21) Application number: 08738768.4
(22) Date of filing: 24.03.2008
(51) Int. Cl.: A63F 13/12, A63F 13/10

(54) **DATA PROVIDING SYSTEM, GAME MACHINE, DATA PROVIDING METHOD, INFORMATION RECORDING MEDIUM AND PROGRAM**

(30) Priority: 28.03.2007 JP 2007083672
(71) Applicant: Konami Digital Entertainment Co., Ltd., Tokyo 107-8324 (JP)
(72) Inventor: KAWABATA, Yasuhiro, Tokyo 107-8324 (JP)
(74) Representative: Epping - Hermann - Fischer
(86) International application number: PCT/JP2008/055429
(87) International publication number: WO 2008/123192

(57) **Abstract**

A data storage unit (130) of a parent machine (100) stores downloaded additional data (131). When the parent machine (100) and a child machine (200) wirelessly connect to each other and the child machine (200) sends child machine information to the parent machine (100), a process control unit (120) of the parent machine (100) searches out any additional data that can be provided from the data storage unit (130) based on the received child machine information. That is, the process control unit (120) searches out additional data that matches a progress status of a game in the child machine (200) from among the additional data (131). The parent machine (100) sends the searched-out additional data to the child machine (200). Hence, the child machine (200), which cannot connect to a server, can obtain additional data from the parent machine (100).

## Description

### Technical Field

The present invention relates to a data providing system, a game machine, a data providing method, an information recording medium, and a program that can ensure appropriate data provision and at the same time can improve user-friendliness.

### Background Art

Portable game machines (compact game machines than run on a battery, etc.) have been widespread from some time before. Since portable game machines are easy to carry around, users can, for example, enjoy games while they are out.
These portable game machines can communicate with other portable game machines and exchange data or play games that require competitors or partners.

As an example, a technique that enables a portable game machine (portable video game machine), which is executing a trading card game, to connect to another portable game machine via a communication cable to send or receive new card information has been disclosed (e.g., see Patent Literature 1).
Patent Literature 1: Unexamined Japanese Patent Application KOKAI Publication No. 2002-52251 (pp. 5-7, Fig. 1)

Recently, portable game machines that are capable of performing wireless communication have also become spread, enabling data transmission between neighboring portable game machines without a communication cable as described above.
As another wireless communication function, such portable game machines can also perform communication based on a wireless LAN standard and connect to the Internet via a nearby wireless access point or the like. Then, as needed, these portable game machines can communicate with a server on the Internet (for example, a web server, a file server, etc.).
Hence, game makers, etc. store additional data that was not included in software when it was released (for example, data about additional items, additional characters, additional scenarios, additional music, etc.) in a server so that the additional data can be provided to portable game machines via the Internet.

Users connect their portable game machine, into which a game cartridge (game software) is mounted, to the Internet to access an intended server and download additional data according to the guidance, etc. of the game. Hence, the users can enjoy the game even more by using the downloaded additional data.

### Disclosure of Invention

### Problem to be Solved by the Invention

As described above, since additional data to be provided is prepared (stored) in an Internet server, users who have not set up an Internet connection environment in the home, etc. cannot download additional data.
Even if an Internet connection environment is set up, when it comes to child users, there is a concern for another factor (access to hazardous sites by a browser, etc.) and some families do not permit Internet connection in the absence of parents, etc. nearby.
These users have to visit the homes of their acquaintances or game shops where Internet connection is available to download additional data, and this is very inconvenient for them.

Hence, these users may consider indirectly obtaining additional data from another portable game machine that has downloaded the additional data. That is, if it is made possible to obtain additional data from another portable game machine (that has already downloaded additional data), the possibility that the users who environmentally cannot download data from the Internet can obtain additional data when acquaintances visit them or when they visit arbitrary places where people gather is remarkably increased.

Still, if it is left unconditionally possible to obtain additional data from another portable game machine, the following undesirable situations might occur.
For example, in a case where there is a downloading condition (requirement) that, for example, one can download additional data from a server only when he/she has cleared a game, the possibility that a portable game machine that has not cleared a game may obtain additional data from another portable game machine (that has already cleared the game and downloaded additional data) runs counter to what the game makers, etc. have intended or desired.
Other than this, in a case where there is a downloading condition that one can download additional data (different additional data) corresponding to each stage or field of a game when he/she has cleared it, if he/she obtains additional data that does not match the progress of the game from another portable game machine, the game might progress inconsistently afterwards or become unexciting.

Hence, a technique that enables additional data to be obtained without causing such undesirable situations has been required.

The present invention was made to solve such a problem and an object of the present invention is to provide a data providing system, a game machine, a data providing method, an information recording medium, and a program that can ensure appropriate data provision and at the same time can improve user-friendliness.

### Means for Solving the Problem

A data providing system according to a first aspect of the present invention is a data providing system that is constituted by a plurality of wirelessly-communicable game machines, each of which is capable of being both a parent machine and a child machine, and allows the game machine that is being a parent machine to provide data to the game machine that is being a child machine. The parent machine includes a downloading unit, an additional data storage unit, a child machine information receiving unit, a searching unit, and an additional data delivering unit, and the child machine includes a child machine information generating unit, a child machine information sending unit, an additional data receiving unit, and a data storage unit.

First, in the parent machine, the downloading unit downloads additional data that matches a progress status of a game from an external device (for example, a server on the Internet) that manages plural kinds of additional data. The additional data storage unit stores the downloaded additional data.
Meanwhile, in the child machine, the child machine information generating unit generates child machine information that includes a progress status of a game. The child machine information sending unit sends the generated child machine information to the parent machine.

In the parent machine, the child machine information receiving unit receives the child machine information sent from the child machine. The searching unit searches out any additional data that can be provided from the additional data storage unit based on the received child machine information. The additional data delivering unit delivers the searched-out additional data to the child machine.
Meanwhile, in the child machine, the additional data receiving unit receives the additional data delivered from the parent machine in response to the sent child machine information. The data storage unit stores the received additional data.

In this way, it is possible to indirectly provide additional data to a child machine from a parent machine that has downloaded the additional data. That is, a child machine that is used in an environment in which Internet connection is not available can obtain additional data from a parent machine that has downloaded the additional data, if the child machine is located near (within a wirelessly communicable distance of) this parent machine. At this time, the parent machine provides only such additional data that can be provided based on the child machine information to the child machine.
Hence, it is possible to ensure appropriate data provision while improving user-friendliness.

The searching unit of the parent machine may search out additional data that matches a progress status of a game in the child machine, and the additional data delivering unit of the parent machine may deliver additional data to the child machine only in a case where the searching unit searches out any additional data.
In this case, since only such additional data that matches the progress status of the game in the child machine is provided from the parent machine, intentions of game makers, etc. will not be breached and it is possible to prevent occurrence of undesirable situations that the game in the child machine 200 will progress inconsistently or will become unexciting.

The parent machine and the child machine may further include an obtainment record managing unit that manages an obtainment record that includes a sender of obtained additional data, and a game content changing unit that changes a content of a game based on whether the sender that is known from the managed obtainment record is the external device or the parent machine.
In this case, whether the sender of additional data is the external device (server) or the parent machine (game machine) is checked, and according to this check, the content of a game can be changed.

The game content changing unit may change a content of a game to a content that matches an environment in which Internet connection is available in a case where the sender known from the obtainment record is the external device, and change a content of a game to a content that matches an environment in which Internet connection is not available in a case where the sender is the parent machine.
In this case, it is possible to appropriately change a content of a game according to an obtainment record.

The parent machine may further include a delivery record managing unit that manages a delivery record of additional data delivery executed to the child machine, and the downloading unit may download privilege data based on the managed reception record.
In this case, it is possible to provide a privilege to a parent machine (game machine) that has contributed to additional data delivery.

A game machine according to a second aspect of the present invention is a game machine that is capable of being both a parent machine and a child machine, and when being a parent machine, provides data to another game machine that is being a child machine, and includes a downloading unit, an additional data storage unit, a child machine information receiving unit, a searching unit, and an additional data delivering unit.

First, the downloading unit downloads additional data that matches a progress status of a game from an external device (for example, a server on the Internet) that manages plural kinds of additional data. The additional data storage unit stores the downloaded additional data.

The child machine information receiving unit receives child machine information that includes a progress status of a game. The searching unit searches out any additional data that can be provided from the additional data storage unit based on the received child machine information. The additional data delivering unit delivers the searched-out additional data to the child machine.

In this way, it is possible to indirectly provide additional data to a child machine from a parent machine that has downloaded the additional data. That is, a child machine that is used in an environment in which Internet connection is not available can obtain additional data from a parent machine that has downloaded the additional data, if the child machine is located near (within a wirelessly communicable distance of) this parent machine. At this time, the parent machine provides only such additional data that can be provided based on the child machine information to the child machine.
Hence, it is possible to ensure appropriate data provision while improving user-friendliness.

When the game machine is being a child machine, the game machine may further include a child machine information generating unit that generates child machine information that includes a progress status of a game, a child machine information sending unit that sends the generated child machine information to a parent machine, an additional data receiving unit that receives additional data delivered from the parent machine, and a data storage unit that stores the received additional data.
In this case, when a game device that has been a parent machine becomes a child machine, it can receive additional data that is delivered from a parent machine.

A data providing method according to a third aspect of the present invention is a data providing method of a system that is constituted by a plurality of wirelessly-communicable game machines, each of which is capable of being both a parent machine and a child machine and allows the game machine that is being a parent machine to provide data to the game machine that is being a child machine, and the method includes a downloading step, an additional data storing step, a child machine information generating step, a child machine information sending step, a child machine information receiving step, a searching step, an additional data delivering step, and an additional data receiving step.

First, in the parent machine, at the downloading step, additional data that matches a progress status of a game is downloaded from an external device (for example, a server on the Internet) that manages plural kinds of additional data. At the additional data storing step, the downloaded additional data is stored in a storage unit.
Meanwhile, in the child machine, at the child machine information generating step, child machine information that includes a progress status of a game is generated. Then, at the child machine information sending step, the generated child machine information is sent to the parent machine.

In the parent machine, at the searching step, any additional data that can be provided is searched out from the storage unit based on the received child machine information. Then, at the additional data delivering step, the searched-out additional data is delivered to the child machine.
Meanwhile, in the child machine, at the additional data receiving step, additional data that is delivered from the parent machine in response to the sent child machine information is received.

In this way, it is possible to indirectly provide additional data to a child machine from a parent machine that has downloaded the additional data. That is, a child machine that is used in an environment in which Internet connection is not available can obtain additional data from a parent machine that has downloaded the additional data, if the child machine is located near (within a wirelessly communicable distance of) this parent machine. At this time, the parent machine provides only such additional data that can be provided based on the child machine information to the child machine.
Hence, it is possible to ensure appropriate data provision while improving user-friendliness.

An information recording medium according to a fourth aspect of the present invention stores a program that controls a computer (including an electronic apparatus) to function as the game machine described above.

A program according to a fifth aspect of the present invention is configured to control a computer (including an electronic apparatus) to function as the game machine described above.

This program may be recorded on a computer-readable information recording medium such as a compact disk, a flexible disk, a hard disk, a magneto-optical disk, a digital video disk, a magnetic tape, a semiconductor memory, etc.

The program described above may be distributed or sold via a computer communication network independently from a computer on which the program is executed. The information recording medium described above may be distributed or sold independently from the computer.

### Effect of the Invention

According to the present invention, it is possible to ensure appropriate data provision while improving user-friendliness.

### Brief Description of Drawings

[Fig. 1] Fig. 1 is a block diagram showing a schematic configuration of a portable game machine according to an embodiment of the present invention.
[Fig. 2A] Fig. 2A is an exemplary diagram for explaining a situation that a portable game machine is connecting to the Internet.
[Fig. 2B] Fig. 2B is an exemplary diagram for explaining a situation that portable game machines are communicating with each other.
[Fig. 3] Fig. 3 is a block diagram for explaining a schematic configuration of a parent machine and a child machine.
[Fig. 4] Fig. 4 is an exemplary diagram showing an example of parent machine information generated by a parent machine.
[Fig. 5A] Fig. 5A is an exemplary diagram for explaining a situation that a parent machine is searching through additional data.
[Fig. 5B] Fig. 5B is an exemplary diagram for explaining a situation that a parent machine is searching through additional data.
[Fig. 6A] Fig. 6A is an exemplary diagram for explaining additional data stored in a data storage unit of a parent machine.
[Fig. 6B] Fig. 6B is an exemplary diagram for explaining a delivery record stored in a data storage unit of a parent machine.
[Fig. 6C] Fig. 6C is an exemplary diagram for explaining game management information stored in a data storage unit of a parent machine.
[Fig. 7] Fig. 7 is an exemplary diagram showing an example of child machine information generated by a child machine.
[Fig. 8] Fig. 8 is a flowchart showing an example of a data providing process and a data receiving process according to an embodiment of the present invention.

### Explanation of Reference Numerals

- 1: portable game machine
- 10: process control unit
- 11: connector
- 12: cartridge
- 13: wireless communication unit
- 14: communication controller
- 15: sound amp
- 16: speaker
- 17: operation keys
- 18: first display unit
- 19: second display unit
- 20: touch panel
- 100: parent machine
- 110: communication unit
- 120: process control unit
- 130: data storage unit
- 200: child machine
- 210: communication unit
- 220: process control unit
- 230: data storage unit

### Best Mode for Carrying Out the Invention

Embodiments of the present invention will now be explained below. For easier understanding, embodiments in which the present invention is applied to a portable game machine (game device) will be explained below, but the present invention can likewise be applied to such information processing devices as computers of various kinds, PDA, cellular phones, etc. That is, the embodiments explained below are intended for illustration, not to limit the scope of the present invention. Hence, although those skilled in the art could employ embodiments obtained by replacing individual components or all the components of the embodiments below with equivalents of those, such embodiments will also be included in the scope of the present invention.

### (Embodiment 1)

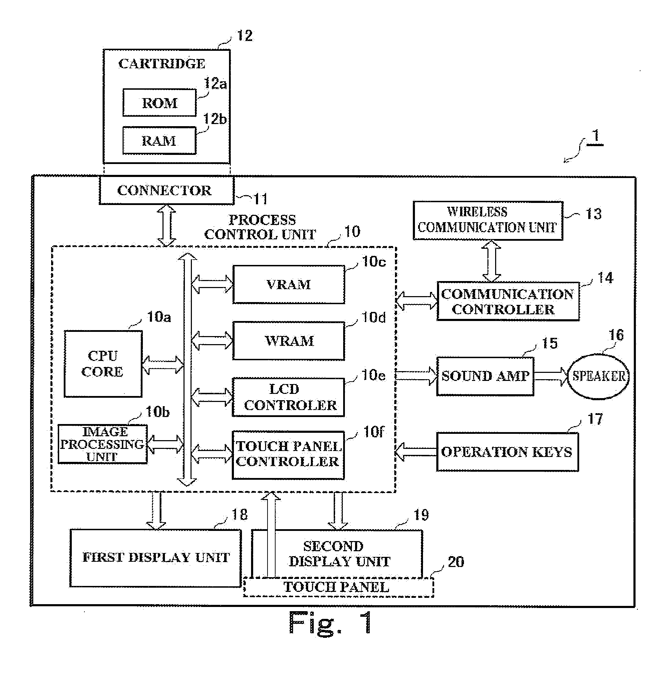

Fig. 1 is an exemplary diagram showing a schematic configuration of a portable game machine according to an embodiment of the present invention. The following explanation will be given with reference to Fig. 1.

The portable game machine 1 includes a process control unit 10, a connector 11, a cartridge 12, a wireless communication unit 13, a communication controller 14, a sound amp 15, a speaker 16, operation keys 17, a first display unit 18, a second display unit 19, and a touch panel 12.

The process control unit 10 includes a Central Processing Unit (CPU) core 10a, an image processing unit 10b, a Video Random Access Memory (VRAM) 10c, a Work RAM (WRAM) 10d, a Liquid Crystal Display (LCD) controller 10e, and a touch panel controller 10f.

The CPU core 10a controls the operation of the whole portable game machine 1, and is connected to each component to exchange control signals and data with it. Specifically, while the cartridge 12 is attached to the connector 11, the CPU core 10a reads out a program and data stored in a Read Only Memory (ROM) 12a in the cartridge 12 and performs a predetermined process.

The image processing unit 10b processes data read out from the ROM 12a in the cartridge 12 or data processed by the CPU core 10a, and stores the processed data in the VRAM 10c.

The VRAM 10c is a memory that stores information to be displayed, and stores image information processed by the image processing unit 10b, etc.
The WRAM 10d stores work data, etc., which are necessary for the CPU core 10a to perform various processes according to a program.

The LCD controller 10e controls the first display unit 18 and the second display unit 19 to display a predetermined display image. For example, the LCD controller 10e converts image information stored in the VRAM 10c into display signals at predetermined synchronization timings and output the images on the first display unit 18. The LCD controller 10e displays a predetermined instruction icon, etc. on the second display unit 19.

The touch panel controller 10f detects a contact (touch) on the touch panel 20 by a touch pen or a user's finger. For example, while a predetermined instruction icon, etc. are displayed on the second display unit 19, the touch panel controller 10f detects a contact to the touch panel 20, the position of the contact, etc.

The connector 11 is a terminal that can connect detachably with the cartridge 12, and when the cartridge 12 is connected, sends or receives predetermined data to and from the cartridge 12.

The cartridge 12 includes the ROM 12a, and a Random Access Memory (RAM) 12b.
The ROM 12a stores a program for realizing a game, and image data, sound data, etc. that accompany the game.
The RAM 12b stores various data that indicate game progress statuses, etc.

The wireless communication unit 13 is a unit that performs wireless communication with the wireless communication unit 13 of another portable game machine 1, and sends or receives predetermined data via an unillustrated antenna (built-in antenna or the like).
The wireless communication unit 13 can also perform wireless communication with a predetermined wireless access point. The wireless communication unit 13 is assigned a unique Media Access Control (MAC) address.

The communication controller 14 controls the wireless communication unit 13 and relays wireless communication between the process control unit 10 and the process control unit 10 of another portable game machine 1 in accordance with a predetermined protocol.
When the portable game machine 1 connects to the Internet via a nearby wireless access point or the like, the communication controller 14 relays wireless communication between the process control unit 10 and the wireless access point or the like in accordance with a wireless-LAN-based protocol.

The sound amp 15 amplifies a sound signal generated by the process control unit 10 and supplies the amplified signal to the speaker 16.
The speaker 16 is constituted by, for example, a stereo speaker or the like, and outputs a predetermined music sound, a sound effect, or the like according to a sound signal amplified by the sound amp 15.

The operation keys 17 are constituted by a plurality of key switches or the like that are appropriately disposed on the portable game machine 1, and receive a predetermined instruction input in response to a user's operation.

The first display unit 18 and the second display unit 19 are constituted by an LCD or the like, and controlled by the LCD controller 10e to appropriately display game images, etc.
The second display unit 19 displays instruction icons, etc. via which a user enters operation instructions by touching the touch panel 20.

The touch panel 20 is overlaid on the front face of the second display unit 19 and receives inputs by being touched by a touch pen or a user's finger.
The touch panel 20 is constituted by, for example, a pressure-sensitive touch sensor panel or the like, detects the pressure of a user's finger or the like, and detects a touched status, a transition from a touched status to an untouched status, etc. Alternatively, the touch panel 20 may detect a touch by a user's finger, etc. based on a change of electrostatic capacitance, etc.

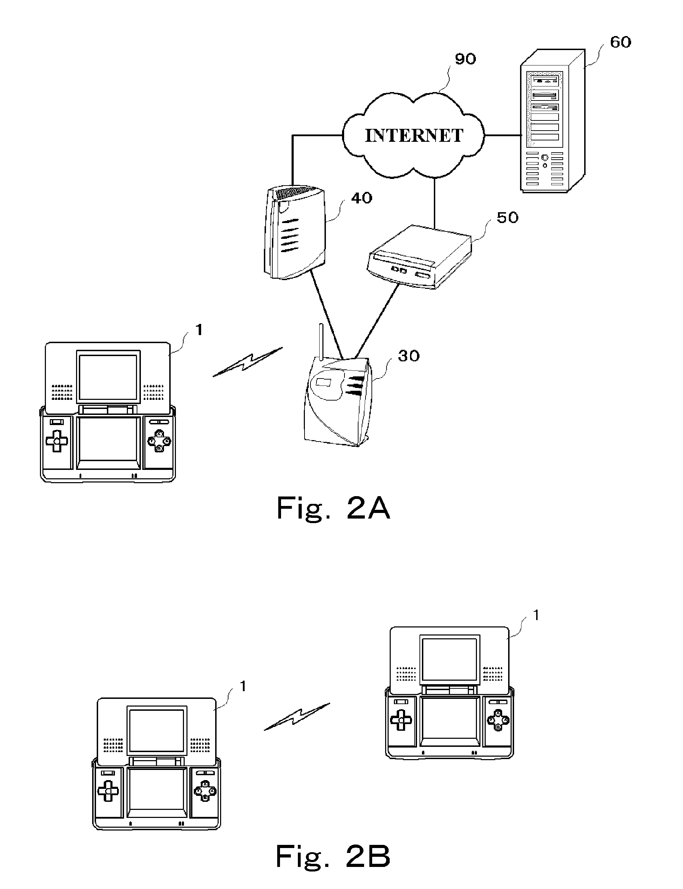

The portable game machine 1 having this configuration can connect to the Internet via a wireless access point or the like, and communicate with a server (a web server, a file server, etc.) on the Internet.
For example, as shown in Fig. 2A, the portable game machine 1 connects to a nearby wireless access point 30 according to a wireless LAN standard, and connects to the Internet 90 from this wireless access point 30 via a modem 40, a network termination unit 50, or the like. Then, the portable game machine 1 can access a server 60 that manages a plurality of additional data (for example, data about additional items, additional characters, additional scenarios, additional music, etc.) and download additional data as needed.
A downloading condition (requirement) is prescribed for each additional data, and the portable game machine 1 can download only additional data whose condition the portable game machine 1 satisfies according to the progress status of a game.
The downloading condition may be, for example, that a predetermined stage, field, dungeon, or the like of a game should have been cleared, that the main character of a game should have earned or own a predetermined level number, an experience point, money, or the like that is equal to or greater than a prescribed value, etc. The downloading condition may be set otherwise. That is, where predetermined information that indicates a progress status of a game is prescribed as a downloading condition, only a portable game machine 1 that satisfies the condition (a portable game machine 1 that has progressed the game up to or beyond this condition) is allowed to download additional data.

In a case where a plurality of portable game machines 1 exist within a communicable distance, they can build a wireless network.
For example, as shown in Fig. 2B, in a case where two portable game machines 1 exist within a communicable distance, one may function as a parent machine while the other may function as a child machine and they can build a wireless network.
Then, in a case where the portable game machine 1 that functions as the parent machine has already downloaded additional data from the server 60 as shown in Fig. 2A mentioned above, it can provide the downloaded additional data to the portable game machine 1 that functions as the child machine.
That is, a portable game machine 1 that cannot connect to the Internet can obtain additional data from a parent machine by behaving as a child machine.

### (Schematic Configuration of a Parent Machine and a Child Machine)

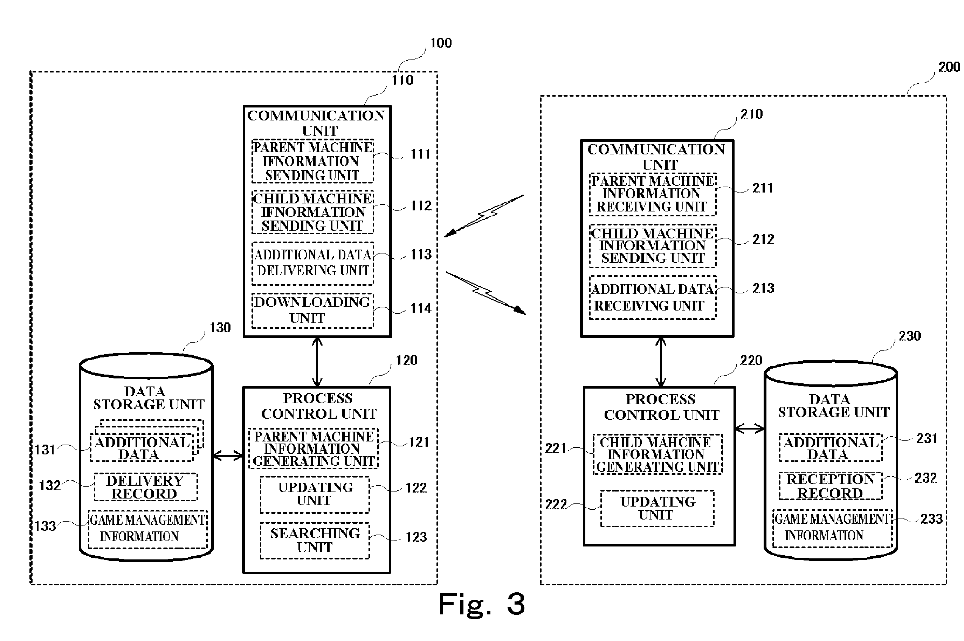

Fig. 3 is an exemplary diagram showing a schematic configuration of the portable game machine 1 according to the present embodiment, of a case where it functions as a parent machine and of a case where it functions as a child machine. The following explanation will be given with reference to Fig. 3. Note that it is assumed that the portable game machine 1 functioning as a parent machine (parent machine 100) has already downloaded additional data from the server 60 in an environment shown in Fig. 2A mentioned above. It is also assumed that the portable game machine 1 functioning as a child machine (child machine 200) has not been able to download additional data yet because it has been in an environment where Internet connection is not available.

As shown in Fig. 3, the parent machine 100 includes a communication unit 110, a process control unit 120, and a data storage unit 130.

The communication unit 110 includes a parent machine information sending unit 111, a child machine information receiving unit 112, an additional data delivering unit 113, and a downloading unit 114, is connected to the process control unit 120 and performs wireless communication with the child machine 200, etc.

The parent machine information sending unit 111 sends parent machine information generated by the process control unit 120 (parent machine information generating unit 121) to the child machine 200.
This parent machine information includes the title of a game in the parent machine 100, ID of additional data already downloaded, etc. The parent machine information will be described in detail later.

The child machine information receiving unit 112 receives child machine information sent from the child machine 200. This child machine information includes a progress status of a game in the child machine 200. The child machine information will be described in detail later.

The additional data delivering unit 113 delivers any additional data, of already downloaded additional data (of additional data 131 in the data storage unit 130, to be described later), that can be provided to the child machine 200 to the child machine 200.

The downloading unit 114 downloads, as needed, additional data from a server when the parent machine 100 connects to the Internet.
That is, in such an environment as shown in Fig. 2A mentioned above, the portable game machine 1 downloads additional data that matches the progress status of a game from the server 60.
As an example, if a game that includes seven stages is under a setting that downloading of additional data is permitted each time a stage is cleared, seven kinds of additional data are prepared in the server 60. A corresponding stage number (a value that indicates the cleared stage) is prescribed for each additional data as a downloading condition.
When a game is executed on the portable game machine 1 and a user clears a stage in the game, for example, automatic connection to the Internet may be brought about so that the downloading unit 114 accesses the server 60 and downloads additional data that corresponds to the cleared stage.
It should be noted that when performing wireless communication with the child machine 200, the portable game machine 1 may be put under a condition in which it cannot perform downloading (outdoors, etc.).

The wireless communication unit 13 and the communication controller 14 can function as such a communication unit 110.

The process control unit 120 includes a parent machine information generating unit 121, an updating unit 122, and a searching unit 123, and controls the whole parent machine 100.

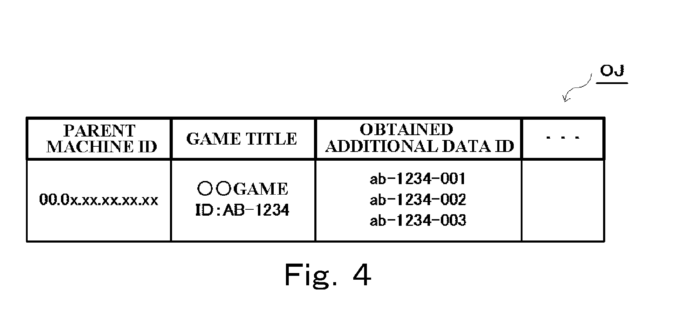

The parent machine information generating unit 121 generates parent machine information that includes the title of a game, ID of additional data that has already been downloaded, etc.
Specifically, the parent machine information generating unit 121 generates parent machine information OJ as shown in Fig. 4, based on game management information 133, additional data 131, etc. that are stored in the data storage unit 130.
As an example, this parent machine information OJ includes a parent machine ID (MAC address or the like), a game title (game ID), and ID of additional data that has already been downloaded.

Returning to Fig. 3, the updating unit 122 stores additional data that has been downloaded by the downloading unit 114 in the data storage unit 130 before communication with the child machine 200 is performed.
Further, when the additional data delivering unit 113 delivers additional data to the child machine 200, the updating unit 122 stores a record of this delivery (a delivery record 132 to be described later) in the data storage unit 130 (to update the data storage unit 130).

The searching unit 123 searches for additional data that can be provided based on child machine information received by the child machine information receiving unit 112.
For example, the searching unit 123 searches through additional data 131 for additional data that matches the progress status of a game in the child machine 200 (additional data that satisfies a condition) according to child machine information.
As an example, in a case where, as described above, a stage number (a value that indicates the highest stage that has been cleared) is prescribed for given additional data as its downloading condition, the searching unit 123 gets the number that indicates the stage that has been cleared based on the progress status of the game and searches for additional data that can be provided according to the value.

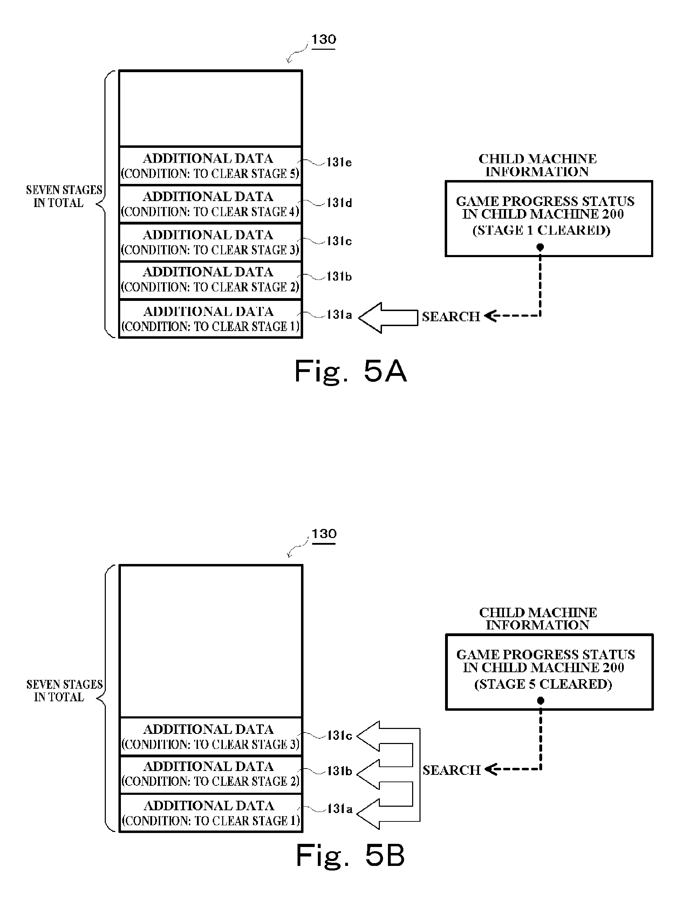

To be more specific, assume that the parent machine 100 has cleared five stages of a game that includes seven stages, and additional data 131 a to 131e, which amount to five stages, are stored in the data storage unit 130 as shown in Fig. 5A. In a case where received child machine information shows that the value that indicates the stage cleared by the child machine 200 is 1, the searching unit 123 searches for additional data 131a, whose downloading condition is prescribed as stage 1.
That is, in a case where the parent machine 100 is ahead of the child machine 200 in the progress of the game, the parent machine 100 searches for additional data that matches the progress status of the child machine 200 from among already downloaded additional data.
On the other hand, in a case where the parent machine 100 has cleared three stages of a game, additional data 131a to 131c amounting to three stages are stored in the data storage unit 130, and received child machine information shows that the value that indicates the stage cleared by the child machine 200 is 5, the searching unit 123 searches through the additional data 131 a to 131 c.
That is, in a case where the child machine 200 is ahead of (or equal to) the parent machine 100, the searching unit 123 searches through all the additional data that have been already downloaded.
Fig. 5A and Fig. 5B show examples of a case where the child machine 200 has obtained no additional data yet. In contrast, in a case where the child machine 200 has already obtained some additional data, the searching unit 123 searches through other additional data than those obtained.

The CPU core 10a described above can function as such a process control unit 120.

Returning to Fig. 3, the data storage unit 130 stores additional data 131, a delivery record 132, game management information 133, etc.

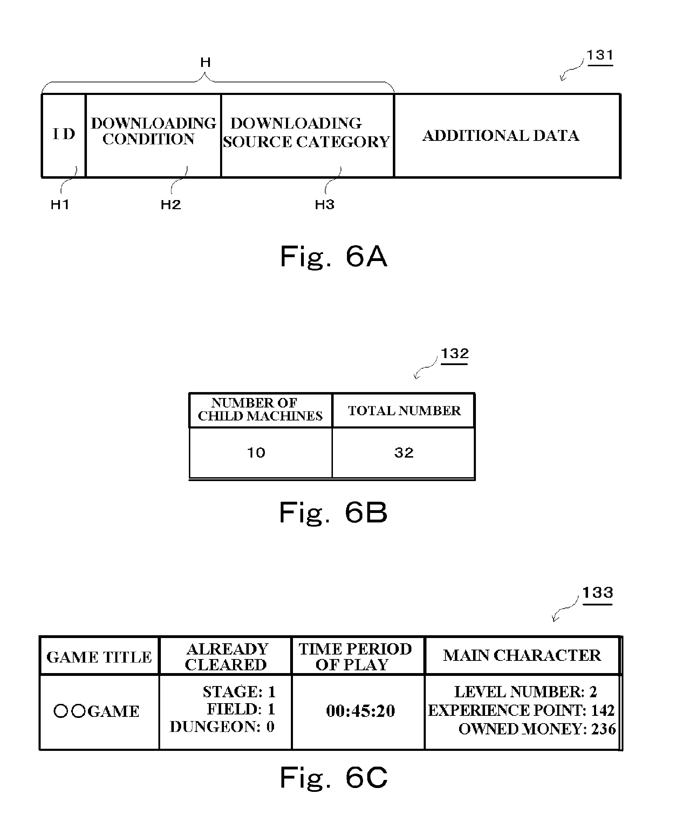

Additional data 131 is data downloaded by the downloading unit 114 from a server.
Specifically, additional data 131 has a header portion H as shown in Fig. 6A, in which pieces of information such as ID (identification information) H1, a downloading condition H2, a downloading source category H3, etc. are set.
The downloading condition H2 specifies, for example, a value that indicates a stage that has been cleared, and the downloading source category H3 specifies a value that indicates which of a server and another portable game machine the additional data concerned was downloaded from.

The delivery record 132 is data for managing additional data delivery that has been executed to a child machine 200.
A specific delivery record 132 may be, the number of child machines 200 to which delivery was executed (child machine number), the number (total number) of additional data delivered, etc. as shown in Fig. 6B.

The game management information 133 is information for managing a game played by the parent machine 100.
Specific game management information 133 may be, a game title, a value that indicates a stage (field, dungeon) that has been cleared, a time period for which the game was played, the level number (experience point, owned money) of the main character, etc. as shown in Fig. 6C.

In addition to these kinds of information, the data storage unit 130 may store information for managing a record of downloading from a server that has been executed (downloading record). This information may be, for example, the date of downloading, the name (or address, etc.) of the server from which data was delivered, the number (total number) of additional data downloaded, etc.

The RAM 12b described above can function as such a data storage unit 130.

Meanwhile, the child machine 200 includes a communication unit 210, a process control unit 220, and a data storage unit 230, as shown in Fig. 3.

The communication unit 210 includes a parent machine information receiving unit 211, a child machine information sending unit 212, and an additional data receiving unit 213, is controlled by the process control unit 220, and performs wireless communication with the parent machine 100, etc.

The parent machine information receiving unit 211 receives parent machine information sent from the parent machine 100. As described above, this parent machine information includes identification information of a game for which the parent machine 100 has downloaded additional data, etc.

The child machine information sending unit 212 sends child machine information generated by the process control unit 220 (child machine information generating unit 221) to the parent machine 100.
This child machine information includes a progress status of a game in the child machine 200.

The additional data receiving unit 213 receives additional data sent from the parent machine 100. That is, the additional data receiving unit 213 receives additional data that the additional data delivering unit 113 of the parent machine 100 delivers in response to the child machine information sent by the child machine information sending unit 212.

The child machine 200 may also be equipped with a downloading unit that is equivalent of the downloading unit 114 of the parent machine 100, but the child machine 200 is not equipped with one here for easier understanding of the invention.
The wireless communication unit 13 and the communication controller 14 described above can function as such a communication unit 210.

The process control unit 220 includes a child machine information generating unit 221 and an updating unit 222, and controls the whole child machine 200.

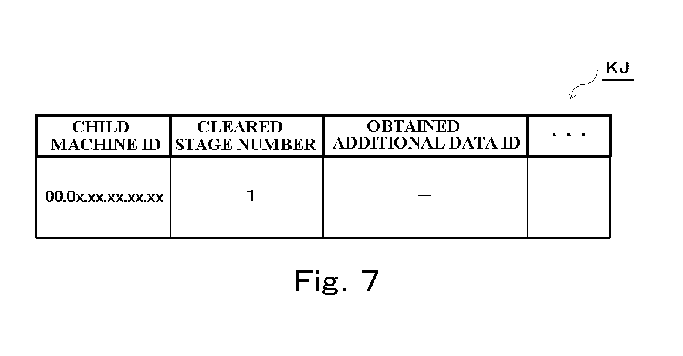

The child machine information generating unit 221 generates child machine information that includes a progress status of a game in the child machine 200.
Specifically, the child machine information generating unit 221 generates child machine information KJ as shown in Fig. 7, based on game management information 233, etc. stored in the data storage unit 230.
As an example, the child machine information KJ includes a child machine ID (MAC address or the like), a cleared stage number (a value that indicates the highest stage that has been cleared), and already obtained additional data ID.
In a case where there is additional data that has been obtained from the parent machine 100 or the like, the ID of this additional data is set as an already obtained additional data ID.

The updating unit 222 stores a record (reception record 232) in the data storage unit 230 (to update the data storage unit), when the additional data receiving unit 213 receives additional data from the parent machine 100.

The CPU core 10a described above can function as such a process control unit 220.

The data storage unit 230 stores additional data 231, a reception record 232, game management information 233, etc.

Additional data 231 is data downloaded by the additional data receiving unit from the parent machine 100.
The additional data 231 has the same structure as the additional data 131 shown in Fig. 6A mentioned above.

The reception record 232 is data for managing a reception of additional data from the parent machine 100 that has been executed.
A specific reception record 232 may be, the date of reception, the number of parent machines 100 from which additional data ware delivered (parent machine number), the number (total number) of additional data received, etc.

The game management information 233 is information for managing a game played by the child machine 200.
The game management information 233 has the same structure as the game management information 133 shown in Fig. 6C mentioned above.

The RAM 12b described above can function as such a data storage unit 230.

(Overview of the Operation of the Parent Machine and the Child Machine)

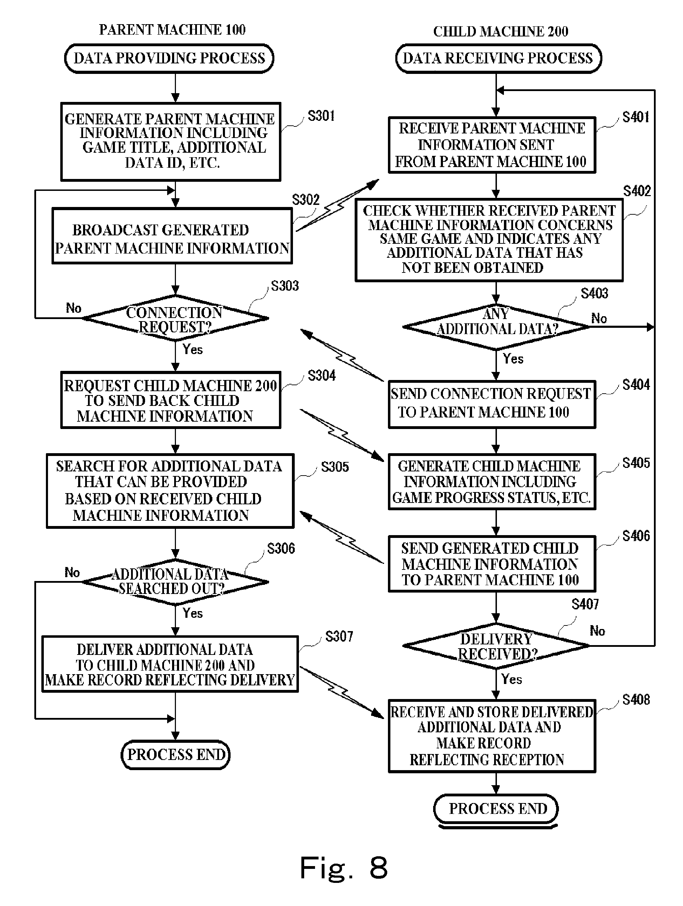

Fig. 8 is a flowchart showing the flow of a data providing process performed by the parent machine 100 having the above-described configuration and a data receiving process performed by the child machine 200. The operations of the parent machine 100 and the child machine 200 will be explained with reference to Fig. 8.
In the following explanation, it is assumed that the parent machine 100 and the child machine 200 have come within a wirelessly communicable distance of each other.

First, the parent machine 100 generates parent machine information that includes a game title, additional data ID, etc. (step S301). That is, the parent machine information generating unit 121 generates parent machine information OJ as shown in Fig. 4.

The parent machine 100 broadcasts the generated parent machine information (step S302). That is, the parent machine information sending unit 111 sends the parent machine information to nearby child machines 200 simultaneously. Then, the parent machine 100 determines whether there is a connection request from a child machine 200 (step S303).
In a case where there is no connection request (step S303; NO), the parent machine 100 returns to step S302 and repeats the simultaneous sending of the parent machine information, for example, after a predetermined period of time passes.

Meanwhile, the child machine 200 receives the parent machine information sent from the parent machine 100 (step S401). That is, the parent machine information receiving unit 211 receives the parent machine information.

The child machine 200 checks whether the received parent machine information concerns the same game and indicates any additional data that has not yet been obtained (step S402). That is, the process control unit 220 refers to the data storage unit 230 and checks whether the child machine 200 and the parent machine 100 play the same game and whether the parent machine 100 has downloaded any additional data that the child machine 200 has not yet obtained.

The child machine 200 determines whether there is any additional data that has not yet been obtained (step S403). Here, in a case where there is no additional data that has not yet been obtained (likewise in a case where different games are played) (step S403; No), the child machine 200 returns to step S401, for example, after a predetermined period of time passes, and repeats steps S401 to S403 described above. That is, the child machine 200 waits for parent machine information to be sent from any other parent machine 100.

On the other hand, in a case where it is determined that there is additional data that has not yet been obtained (step S403; Yes), the child machine 200 sends a connection request to the parent machine (step S404). That is, the communication unit 210 sends a connection request according to a predetermined protocol in order to establish communication with the parent machine 100.

Hence, the parent machine 100 determines that there is a connection request from the child machine 200 (step S303; Yes), and requests the child machine 200 to send back child machine information (step S304).

The child machine 200 generates child machine information including the progress status of the game (step S405). That is, the child machine information generating unit 221 generates child machine information KJ as shown in Fig. 7.

The child machine 200 sends the generated child machine information to the parent machine 100 (step S406). That is, the child machine information sending unit 212 sends back the child machine information to the parent machine 100.

In response to this, the parent machine 100 searches for additional data that can be provided, based on the received child machine information, etc. (step S305). That is, the searching unit 123 searches for additional data that matches the progress status of the game in the child machine 200 (that satisfies a condition) from among additional data 131 according to the child machine information.

The parent machine 100 determines whether any additional data has been searched out or not (step S306). That is, the parent machine 100 determines whether there is any additional data that can be provided to the child machine 200.
In a case where it is determined that there is no additional data (step S306; No), the parent machine 100 terminates the data providing process after, for example, sending back information to the effect that there is no additional data that can be provided.

On the other hand, in a case where it is determined that there is any additional data (step S306; Yes), the parent machine 100 delivers this additional data to the child machine 200 and generates a delivery record that reflects this delivery (step S307).
That is, the additional data delivering unit 113 delivers the additional data that can be provided to the child machine 200, and the updating unit 122 updates the delivery record 132 in the data storage unit 130.

The child machine 200 determines whether or not there has been a delivery from the parent machine 100 after the child machine information was sent at step S406 described above (step S407). Note that in a case where information to the effect that there is no additional data that can be provided is received, the child machine 200 determines that there has been no delivery from the parent machine 100.
Here, in a case where it is determined that there has been no delivery from the parent machine 100 (step S407; No), the child machine 200 returns to step S401 and repeats the steps S401 to S407 described above.

On the other hand, in a case where it is determined that there has been a delivery (step S407; Yes), the child machine 200 receives and stores the additional data delivered from the parent machine 100, and generates a reception record that reflects this reception (step S408).
That is, the additional data receiving unit 213 receives the additional data and stores it in the data storage unit 230. The updating unit 222 updates the reception record 232 in the data storage unit 230.

Through these data providing process and data receiving process, it is possible to provide additional data indirectly to a child machine 200 from a parent machine 100 that has downloaded this additional data. That is, even a child machine 200 that is used in an environment in which Internet connection is not available can obtain additional data from a parent machine 100 that has downloaded the additional data, if the child machine is located near (within a wirelessly communicable distance of) the parent machine 100.
At this time, only additional data that matches the progress status of the game in the child machine 200 is provided from the parent machine 100. Therefore, the intentions of game makers, etc. will not be breached and it is possible to prevent occurrence of undesirable situations that the game in the child machine 200 will progress inconsistently or will become unexciting.

Hence, it is possible to ensure appropriate data provision while improving user-friendliness.

### (Another Embodiment)

In the embodiment described above, in order to explain data provision from the parent machine 100 to the child machine 200 in detail, the description has not gone beyond updating of the reception record 232 in the child machine 200 and updating of the delivery record 132 in the parent machine 100.
The reception record 232 and the delivery record 132 will appropriately be used by the child machine 200 and the parent machine 100.
An example use of the reception record 232 and the delivery record 132 will be explained below.

The reception record 232 updated in the data storage unit 230 of the child machine 200 makes it possible to know that the child machine 200 is mainly used in an environment in which Internet connection is not available.
That is, by referring to the reception record 232, it is possible to know that additional data have been obtained not from a server on the Internet but from a parent machine 100. That is, when a user plays a game on a child machine 200, it is foreseen that the user may face a situation that he/she cannot connect to the Internet.
Hence, the child machine 200 may change to a game content that matches the environment in which Internet connection is not available.

For example, when executing a game, the process control unit 220 of the child machine 200 refers to the reception record 232, and when determined that the environment does not allow Internet connection, prohibits Internet connection after a stage is cleared and reduces battery consumption thereby.
Other than this, in consideration of the difficulty with obtaining additional data, in order not to disadvantage a user who is under the environment in which Internet connection is not available, it is possible to appropriately change the game content, by, for example, offering temporary equipment to the main character until additional data is obtained from a parent machine 100.
On the other hand, the process control unit 120 of the parent machine 100 may refer to the downloading record stored in the data storage unit 130 when executing a game, and if it is ensured that the machine is in the environment in which Internet connection is available, change the content of a game to a content that matches the environment. For example, in the game that is executed, the parent machine 100 may access a server to receive any other data than additional data (for example, tips for attacks, messages, etc.).

The delivery record 132 updated in the data storage unit 130 of the parent machine 100 makes it obvious how many additional data the parent machine 100 in place of a server has delivered to how many child machines 100.
That is, a reference to the delivery record 132 reveals the degree of contribution by the parent machine 100 that has delivered any additional data.
Then, the parent machine 100 may download privilege data (for example, rare data, coupon data, etc.) from the server based on the delivery record 132.

For example, when connecting to the Internet and accessing a server, the downloading unit 114 of the parent machine 100 reads out the delivery data 132 and sends it to the server. The server evaluates the degree of contribution that is determined by the delivery record 132, and prepares rare data or the like corresponding to the degree of contribution in a manner by which the data can be downloaded. Then, the downloading unit 114 downloads the prepared rare data or the like from the server.

In the embodiment described above, for easier understanding of the invention, the parent machine 100 and the child machine 200 were clearly distinguished, and functions and operations that are in line with the role of each were explained.
However, the portable game machine 1 can become both the parent machine 100 and the child machine 200 appropriately according to the situation.
For example, a child machine 200 that has received delivery of additional data from a parent machine 100 can in turn become a parent machine 100 in a different situation to deliver its additional data to another child machine 200.
Further, a child machine 200 that has not been able to receive delivery of as many additional data as needed from a parent machine 100 because of it being ahead in the game, etc., becomes able to download additional data from a server as a parent machine 100 once it becomes possible for the child machine 200 to connect to the Internet, and can likewise deliver its additional data to another child machine 200.
Furthermore, in a case where a parent machine 100 that has been able to connect to the Internet so far progresses a game under a situation in which Internet connection is not available because of the game being played during a journey, etc., it can become a child machine 200 to receive additional data that may be delivered from a nearby parent machine 100.

As can be understood, the portable game machine 1 is not fixed to either of a parent machine 100 or a child machine 200 but can become both according to the situation. A record of additional data delivery to a child machine 200 when the portable game machine 1 is being a parent machine 100 is managed as a delivery record shown in Fig. 6B mentioned above. A downloading source category shown in Fig. 6A is appropriately set to received (downloaded) additional data. Hence, each additional data is individually managed in a manner by which it is possible to know whether the data has been obtained from a parent machine 100 (portable game machine 1) or from a server (Internet).

In the embodiment described above, a case where two portable game machines 1 perform wireless communication was explained as an example. However, appropriate application is possible to a case where, of three or more portable game machines 1, one becomes a parent machine 100 and the others become a child machine 200.

Further, in the embodiment described above, a case where portable game machines 1 perform wireless communication was explained as an example. However, appropriate application is possible to a case where they perform wired communication via a communication cable.

In the embodiment described above, a sensory game was explained as an example. However, appropriate application is possible not only to such a sensory game but to a game in which a position, etc. of a controller are measured and used as inputs.
The present application claims priority to Japanese Patent Application No. 2007-083672, the content of which is incorporated herein in its entirety.

### Industrial Applicability

As explained above, according to the present invention, it is possible to provide a data providing system, a game machine, a data providing method, an information recording medium, and a program that can ensure appropriate data provision and at the same time can improve user-friendliness.

## Claims

1. A data providing system, comprising a plurality of wirelessly-communicable game machines (1), each of which is capable of being both a parent machine (100) and a child machine (200), the system allowing the game machine (1) that is being a parent machine (100) to provide data to the game machine (1) that is being a child machine (200),
wherein the parent machine (100) includes:
a downloading unit (114) that downloads additional data that matches a progress status of a game from an external device (60) that manages plural kinds of additional data;
an additional data storage unit (130) that stores the downloaded additional data;
a child machine information receiving unit (112) that receives child machine information sent from the child machine (200);
a searching unit (123) that searches out any additional data that can be provided from the additional data storage unit (130) based on the received child machine information; and
an additional data delivering unit (113) that delivers the searched-out additional data to the child machine (200), and
wherein the child machine (200) includes:
a child machine information generating unit (221) that generates child machine information that includes a progress status of a game;
a child machine information sending unit (212) that sends the generated child machine information to the parent machine (100);
an additional data receiving unit (213) that receives the additional data that is delivered from the parent machine (100) in response to the sent child machine information; and
a data storage unit (230) that stores the received additional data.

2. The data providing system according to claim 1,
wherein the searching unit (123) of the parent machine (100) searches out any additional data that matches a progress status of a game in the parent machine (200), and
the additional data delivering unit (113) of the parent machine (100) delivers additional data to the child machine (200) only in a case where any additional data is searched out by the searching unit (123).

3. The data providing system according to claim 1,
wherein the parent machine (100) and the child machine (200) further include:
an obtainment record managing unit (130, 230) that manages an obtainment record including a sender of obtained additional data; and
a game content changing unit (120, 220) that changes a content of a game based on whether the sender that is known from the managed obtainment record is the external device (60) or the parent machine (100).

4. The data providing system according to claim 3,
wherein the game content changing unit (120, 220) changes a content of a game to a content that matches an environment in which Internet connection is available in a case where the sender that is known from the obtainment record is the external device (60), and changes a content of a game to a content that matches an environment in which Internet connection is not available in a case where the sender is the parent machine (100).

5. The data providing system according to claim 1,
wherein the parent machine (100) further includes a delivery record managing unit (130) that manages a delivery record of additional data delivery executed to the child machine (200), and
the downloading unit (114) downloads privilege data based on the managed reception record.

6. A game machine that is capable of being both a parent machine (100) and a child machine (200), and when being a parent machine (100), provides data to another game machine (1) that is being a child machine (200), comprising:
a downloading unit (114) that downloads additional data that matches a progress status of a game from an external device (60) that manages plural kinds of additional data;
an additional data storage unit (130) that stores the downloaded additional data;
a child machine information receiving unit (112) that receives child machine information sent from the child machine (200);
a searching unit (123) that searches out any additional data that can be provided from the additional data storage unit (130) based on the received child machine information; and
an additional data delivering unit (113) that delivers the searched-out additional data to the child machine (200).

7. The game machine according to claim 6,
wherein when the game machine is being a child machine (200), the game machine further includes:
a child machine information generating unit (221) that generates child machine information including a progress status of a game;
a child machine information sending unit (212) that sends the generated child machine information to the parent machine;
an additional data receiving unit (213) that receives additional data delivered from the parent machine in response to the sent child machine information; and
a data storage unit (230) that stores the received additional data.

8. A data providing method of a system that is constituted by a plurality of wirelessly-communicable game machines (1), each of which is capable of being both a parent machine (100) and a child machine (200), the system allowing the game machine (1) that is being a parent machine (100) to provide data to the game machine (1) that is being a child machine (200), the method comprising:
a downloading step, performed by the parent machine (100), of downloading additional data that matches a progress status of a game from an external device (60) that manages plural kinds of additional data;
an additional data storing step, performed by the parent machine (100), of storing the downloaded additional data in a predetermined storage unit (130);
a child machine information generating step, performed by the child machine (200), of generating child machine information including a progress status of a game;
a child machine information sending step, performed by the child machine (200), of sending the generated child machine information to the parent machine (100);
a child machine information receiving step, performed by the parent machine (100), of receiving the child machine information sent from the child machine (200);
a searching step, performed by the parent machine (100), of searching out any additional data that can be provided from the storage unit (130) based on the received child machine information;
an additional data delivering step, performed by the parent machine (100), of delivering the searched-out additional data to the child machine (200); and
an additional data receiving step, performed by the child machine (200), of receiving the additional data delivered from the parent machine (100).

9. An information recording medium storing a program that controls a computer that is capable of being both a parent machine (100) and a child machine (200), and when being a parent machine (100), provides data to another game machine (1) that is being a child machine (200), the program controlling the computer to function as:
a downloading unit (114) that downloads additional data that matches a progress status of a game from an external device (60) that manages plural kinds of additional data;
an additional data storage unit (130) that stores the downloaded additional data;
a child machine information receiving unit (112) that receives child machine information sent from the child machine (200);
a searching unit (123) that searches out any additional data that can be provided from the additional data storage unit (130) based on the received child machine information; and
an additional data delivering unit (130) that delivers the searched-out additional data to the child machine (200).

10. A program that controls a computer that is capable of being both a parent machine (100) and a child machine (200), and when being a parent machine (100), provides data to another game machine (1) that is being a child machine (200), the program controlling the computer to function as:
a downloading unit (114) that downloads additional data that matches a progress status of a game from an external device (60) that manages plural kinds of additional data;
an additional data storage unit (130) that stores the downloaded additional data;
a child machine information receiving unit (112) that receives child machine information sent from the child machine (200);
a searching unit (123) that searches out any additional data that can be provided from the additional data storage unit (130) based on the received child machine information; and
an additional data delivering unit (130) that delivers the searched-out additional data to the child machine (200).
